# EUROPÄISCHE PATENTSCHRIFT

(11) **EP 3 228 432 B1**
(45) Veröffentlichungstag und Bekanntmachung des Hinweises auf die Patenterteilung: **22.07.2020**
(21) Anmeldenummer: 17401016.5
(22) Anmeldetag: 17.02.2017
(51) Int. Cl.: B29C 44/12, B65D 39/00, B65D 50/00, B29L 31/56

(54) **VERFAHREN ZUR HERSTELLUNG EINES T-KORKEN, EINES T-KORKEN MIT KINDERSICHERUNG UND NACH DEM VERFAHREN HERGSTELLTER T-KORKEN ODER T-KORKEN MIT KINDERSICHERUNG**
METHOD FOR PRODUCING A T-CORK OR A T-CORK WITH CHILD SAFETY FUNCTION AS WELL AS T-CORK OR T-CORK WITH A CHILD SAFETY FUNCTION MADE ACCORDING TO THE METHOD
PROCÉDÉ DE FABRICATION DE BOUCHON EN LIÈGE EN T OU D'UN BOUCHON EN LIÈGE EN T AVEC SÉCURITÉ ENFANT ET BOUCHON EN LIÈGE EN T OU BOUCHON EN LIÈGE EN T AVEC SÉCURITÉ ENFANT FABRIQUÉ SELON LE PROCÉDÉ

(30) Priorität: 25.02.2016 DE 102016103351; 25.02.2016 DE 102016103355
(43) Veröffentlichungstag der Anmeldung: 11.10.2017
(73) Patentinhaber: Spiegelhauer, Gunter, 09526 Olbernhau (DE)
(72) Erfinder: Spiegelhauer, Gunter, 09526 Olbernhau (DE)
(74) Vertreter: Thomas, Matthias

(56) Entgegenhaltungen:
- EP-A1- 2 383 196
- CN-U- 201 566 919
- DE-A1- 1 914 535
- DE-U1-202015 008 211
- US-A- 4 188 457

## Beschreibung

Die Erfindung betrifft ein Verfahren zur Herstellung von T-Korken, die zum Verschluss von Flaschen geeignet und als so genannte T-Korken bekannt sind. Die Erfindung betrifft ebenso die nach dem Verfahren hergestellten T-Korken.

Die Erfindung betrifft ebenso ein Verfahren zur Herstellung von T-Korken mit einer Kindersicherung und die nach dem Verfahren hergestellten T-Korken.

Allgemein bekannt sind als Korken bezeichnete Stopfen in einer im Wesentlichen zylindrischen Form aus dem Werkstoff Korkeiche.

Es ist auch bekannt, solcher Art Stopfen aus schäumbarem Kunststoff zu erzeugen. In DE 100 12 394 A1 sind ein solcher Stopfen und das Herstellungsverfahren dafür vorgeschlagen.

Ebenso bekannt sind die so genannten T-Korken, bei denen dem eigentlichen Stopfen ein scheibenförmiges Bauteil zugeordnet ist, das sich außerhalb der zu verschließenden Öffnung befindet und als Handhabungs- und Kennzeichnungsmittel verwendet wird. Bei dieser Bauform kann der Stopfen leicht zum erneuten Verschluss verwendet werden. Ein weiterer Vorteil der Bauform des T-Korken besteht darin, dass es keines Korkenziehers bedarf, um ihn zu entfernen.

Bei den bekannten T-Korken besteht das scheibenförmige Bauteil zumeist aus dem Werkstoff Holz oder es ist ein Spritzgussteil aus einem thermoplastischen Kunststoff.

Soweit ein solcher T-Korken mit einem Stopfen aus Korkeiche verbunden werden muss, kann nur eine stoffschlüssige Verbindung ausgeführt werden. Damit geht jedoch die Gefahr einher, dass die den Stoffschluss herstellenden Mittel in die Korkeiche einwandern und den Geschmack oder andere Eigenschaften des Gefäßinhalts negativ beeinflussen.

T-Korken mit einem Stopfen aus geschäumten Kunststoff sind in EP 2 383 196 A1 und CN 201 566 919 U beschrieben.

In DE 810 928 B ist deshalb eine kraftschlüssige Halterung für den Stopfen im Griffstück vorgeschlagen. Um dies zu erreichen, werden im Griffstück zahnähnliche Gebilde ausgeformt, zwischen deren Spitzen der Stopfen eingeklemmt wird. Die Qualität einer solchen Verbindung ist vor allem vom Werkstoff des Stopfens abhängig.

Seit einigen Jahren ist bekannt, dass Korkeiche durch schäumbare thermoplastische Kunststoffe substituiert werden kann. Damit besteht die Möglichkeit, den eigentlichen Stopfen direkt mit dem scheibenförmigen Bauteil zu verbinden.

Bei der Herstellung dieser T-Korken wird das scheibenförmige Bauteil vorgefertigt und dann in eine Spritzgussform eingelegt. Der schäumbare Kunststoff füllt nach dem Einspritzen in die Form den verbliebenen Hohlraum aus und es entsteht eine feste Verbindung zwischen dem scheibenförmigen Bauteil und dem aus dem schäumbaren Kunststoff bestehenden Stopfen.

Es hat sich gezeigt, dass die auf diese Weise erzeugten Verbindungen eine zu geringe Festigkeit haben. Besteht das scheibenförmige Bauteil beispielsweise aus Holz und wird die Verbindung zum Stopfen als zylindrische Bohrung ausgeführt, kann es beim Drehen oder Ziehen des Stopfens zu Funktionslosigkeit oder zu Gewaltbrüchen kommen.

Um die Kontaktfläche zu vergrößern, werden deshalb die Bohrungen im Bereich des Bohrungsgrundes erweitert, indem mit einem geeigneten Werkzeug eine Formhinterschneidung erzeugt wird. Beim Ausschäumen einer solchen Bohrung entsteht am Stopfen ein Kragen, so dass beim axialen Ziehen des T-Korken Formschluss besteht und der Stopfen sicher entfernt werden kann. Wird jedoch das scheibenförmige Bauteil gedreht, kann die Verbindung zwischen dem ausgeschäumten Kunststoff und der Oberfläche der hinterschnittenen Bohrung zerstört werden. Das scheibenförmige Bauteil dreht sich dann, ohne dass der Stopfen sich bewegt.

Da die scheibenförmigen Bauteile gewöhnlich durch spanende Formgebung erzeugt werden, bereitet die hinterschnittene Bohrung für die Fertigung Probleme. Die Bearbeitung der Außenkontur in einer vollautomatisch arbeitenden Einrichtung und die gleichzeitige Herstellung der konzentrischen Bohrung bereiten keine Schwierigkeiten. Um in die Bohrung den Hinterschnitt einzubringen, muss allerdings der den Bohrer tragende Arbeitsschlitten sehr weit zurück, eventuell auch zur Seite, gefahren werden. Erst dann kann ein weiterer Arbeitsschlitten mit einem Werkzeug in den Arbeitsbereich eingefahren werden, das den Hinterschnitt ausführt. Die Dauer der gesamten Arbeitszyklen ist erhöht.

Es besteht ferner eine Abhängigkeit der erzeugten Verbindung von der Oberflächengüte des scheibenförmigen Bauteils im Bereich der Bohrung einerseits und der Menge des eingespritzten ausschäumenden Kunststoffs andererseits. Zunächst hängt die Qualität der Oberfläche von der Art des Werkstoffes ab. Wird bei Verwendung scharfer Werkzeuge in der Bohrung eine zu glatte Oberfläche erzeugt, kann sich der Kunststoff ebenfalls nicht ausreichend verankern. Wird eine zu geringe Menge Kunststoff eingespritzt, verankert sich dieser ebenfalls nur ungenügend mit der Oberfläche der Bohrung. Ein fester Sitz ist jedoch ein wichtiges Qualitätskriterium. Dies ist im Stand der Technik nur erreichbar durch die Schaffung einer großen Oberfläche im Inneren des scheibenförmigen Bauteils und einer ausreichend großen Einspritzmenge an schäumbarem Kunststoff, was die T-Korken erheblich verteuert.

Von Behältnissen, deren Öffnungen mit Schraubverschlüssen ausgestattet sind, sind so genannte Originalitäts- und auch Kindersicherungen bekannt.

Originalitätssicherungen bestehen im Grunde darin, dass beim Entfernen des Verschlusselements eine bis dahin bestehende feste Verbindung zerstört wird.

Die so genannten Schraubverschlüsse mit Kindersicherung hingegen bedienen sich einer aus wenigstens zwei Teilen bestehenden Verschlusskappe, wobei das innere und das äußere Teil jeweils zu einander kompatible Verzahnungsformen haben, so dass beim Öffnen solcher Schraubverschlüsse das äußere Teil mit einer größeren Axialkraft gegen das innere Teil gedrückt werden muss, wozu Kinder nicht in der Lage sind. Der zum Öffnen solcher Schraubverschlüsse notwendige Krafteinsatz kann durch die Gestaltung der Verzahnungen beeinflusst werden.

Bekannt sind auch Schraubverschlüsse mit Kindersicherung, bei denen der Rand der Schraubkappe zusammengedrückt werden muss, damit ein am Behältnis vorhandenes Hindernis überwunden werden kann.

In DE 20 2015 008211 U1 ist eine Kindersicherung für T-Korken beansprucht.

Dem beschriebenen Stand der Technik entsprechend besteht ein Bedarf nach kostengünstig herstellbaren T-Korken, die trotzdem die geforderten Eigenschaften, wie dichter Verschluss, fester Zusammenhalt, axiales Ziehen sowie Dreh- und überlagernde Bewegungen gewährleisten.

Es besteht ebenso ein Bedarf an T-Korken, die mit einer Kindersicherung versehen sind beziehungsweise ähnlich den bekannten Kindersicherungen wirken. Dies deshalb, da Behältnisse, die mit T-Korken verschlossen werden, auch mit Inhaltsstoffen befüllt werden, von denen besondere Risiken ausgehen oder bei denen einfach der Zugang zum Inhalt durch minderjährige oder unwissende Personen erschwert werden soll.

Der im Stand der Technik bekannte T-Korken mit einer umlaufenden Nut im scheibenförmigen Bauteil kann dafür nicht eingesetzt werden. Bei dieser Art T-Korken ist ein Lösen des Stopfens von vielen Zufälligkeiten abhängig und deshalb nicht für einen breiten Einsatz als Kindersicherung geeignet.

Es ist deshalb Aufgabe der Erfindung, den aus dem Stand der Technik bekannten Stopfen in der Form des T-Korken mit einem koaxial zur Bohrung angeordneten Hinterschnitt so weiter zu entwickeln, dass er die genannten Anforderungen erfüllt, die Herstellung des scheibenförmigen Bauteils vereinfacht wird und die Menge an schäumbarem Kunststoff reduziert werden kann. Es ist weiterhin Aufgabe der Erfindung, ein Verfahren zur Herstellung solcher Stopfen vorzuschlagen.

Eine weitere Aufgabe der Erfindung ist es, den aus dem Stand der Technik bekannten Stopfen in der Form des T-Korken mit einem koaxial zur Bohrung angeordneten Hinterschnitt so weiter zu entwickeln, dass bei bestimmten Versuchen, den T-Korken allein durch Drehen zu bewegen, eine solche Drehbewegung des Griffstücks zwar möglich ist, jedoch der Stopfen nicht mit bewegt wird. Eine kombinierte Bewegung aus Zug und Drehung hingegen soll das Ziehen des T-Korken ermöglichen. Letztlich soll dabei auch die Menge an schäumbarem Kunststoff reduziert werden. Es ist weiterhin Aufgabe der Erfindung, ein Verfahren zur Herstellung solcher Stopfen vorzuschlagen.

Diese oben stehenden Aufgaben werden gelöst für das Verfahren zur Herstellung von T-Korken mit den Merkmalen des kennzeichnenden Teils des Patentanspruches 1 in Verbindung mit den Merkmalen des Oberbegriffes dieses Patentanspruches. Die Aufgaben werden gelöst für das Verfahren zur Herstellung von T-Korken mit Kindersicherung nach den Merkmalen des Patentanspruches 2. Die Aufgabe wird gelöst für einen T-Korken mit den Merkmalen des kennzeichnenden Teils des Patentanspruches 10. Die oben stehende Aufgabe wird gelöst für den erfindungsgemäßen T-Korken mit einer Kindersicherung mit den Merkmalen des kennzeichnenden Teils des Patentanspruches 13. Neben- und nachgeordnete Patentansprüche beschreiben Ausführungsformen des erfindungsgemäßen Verfahrens beziehungsweise des T-Korkens.

In der nachstehenden Beschreibung, den Ausführungsbeispielen und den Patentansprüchen werden die nachstehend aufgeführten Begriffe mit folgendem Bedeutungsinhalt verwendet:
T-Korken - ist eine Baueinheit, die wenigstens aus einem scheibenförmigen Bauteil und einem an dasselbe angeformten Stopfen besteht.
T-Korken mit Kindersicherung - ist ein T-Korken, bei dem die Verbindung zwischen dem scheibenförmigen Bauteil und dem Stopfen eine Drehbewegung zulässt. Zwischen dem scheibenförmigen Bauteil und dem angeformten Stopfen besteht wenigstens eine formschlüssige Verbindung, die bei einer Drehbewegung des scheibenförmigen Bauteils eine solche ermöglicht und einen Einsatz als Kindersicherung erlaubt.
Scheibenförmiges Bauteil - ist ein in seiner Außenform im Wesentlichen rotationssymmetrisches Teil, das wenigstens eine plane Stirnfläche besitzt, in der eine Bohrung mit einer Formhinterschneidung angeordnet ist. Das scheibenförmige Bauteil kann außerhalb des Funktionsbereiches auch andere geometrische Formen haben, sofern dies allein wegen ästhetischer Funktionen gewünscht ist.
Stopfen - ist der Abschnitt des T-Korken, der in einer Form durch Füllen des Formenhohlraums erzeugt und gleichzeitig mit dem scheibenförmigen Bauteil verbunden wird.
Kindersicherung - ist ein Mittel, das Öffnen von Behältnissen durch Ziehen eines T-Korken dadurch zu erschweren, dass eine Drehbewegung am scheibenförmigen Bauteil ohne Drehen des in einer Öffnung steckenden Stopfens möglich ist, dabei jedoch kein Ziehen des Stopfens möglich ist. Ein Ziehen des Stopfens ist ausschließlich bei Vorliegen einer Axialkraft möglich.

Nach der Erfindung wird ein T-Korken, bestehend aus einem scheibenförmigen Bauteil und einem an diesem angeformten Stopfen erzeugt, wobei im Verbindungsbereich zwischen beiden eine Kontaktfläche am scheibenförmigen Bauteil ausgebildet ist, die in axialer und in Drehrichtung um die Mittelachse des T-Korken Formschluss gewährleistet. Die Erfindung beruht auf der Erkenntnis, dass der für die Ausformung des Stopfens verwendete schäumbare Kunststoff nachgiebig und aufgrund seiner Elastizität auch in der Lage ist, vorher eingenommene Positionen und Formen nach einer gewaltsamen Verformung wieder einzunehmen.

Nach der Erfindung wird ein Verfahren ausgeführt, bei dem in einem zusätzlichen Arbeitsschritt eine wenigstens einseitig hinterschnittene Bohrung erzeugt wird.

Nach der Erfindung wird vorzugsweise ein scheibenförmiges Bauteil aus Holzwerkstoffen durch spanende Formgebung der Außenkontur und Einbringen einer konzentrischen Bohrung in einer automatisierten Fertigungseinrichtung erzeugt. Bevorzugt kommt hier ein auf die Bearbeitung von Holzwerkstoffen ausgelegter Drechselautomat zum Einsatz.

Alternativ kann auch ein scheibenförmiges Bauteil mit kreisförmiger Außenkontur aus Plattenmaterial mit Hilfe von Kronensägen erzeugt werden, das beim Aussägen gleichzeitig die konzentrische Bohrung erhält. Diese Möglichkeit kann beispielsweise bei der Verarbeitung von Lagenschichtholz, Kunststoffplatten und dergleichen eingesetzt werden.

Erfindungsgemäß wird das erhaltene scheibenförmige Bauteil danach einer Einrichtung zugeführt, die am Bohrungsgrund der konzentrischen Bohrung einen Hinterschnitt ausführt.

Der Hinterschnitt wird partiell ausgeführt, so dass kein umlaufender Hinterschnitt vorhanden ist. Das scheibenförmige Bauteil wird dazu in der Einrichtung eingespannt und eine Spindeleinheit wird mit ihrer Arbeitsspindel bis zum Bohrungsgrund ausgefahren. Am vorderen Ende der Arbeitsspindel trägt diese ein Fräswerkzeug oder ein Kreissägeblatt. Nach Erreichen der Arbeitsposition wird die Arbeitsspindel seitlich bewegt, wodurch der Hinterschnitt der konzentrischen Bohrung entsteht.

Bevorzugt wird ein doppelseitiger Hinterschnitt, der durch Hin- und Her-Bewegung der Arbeitsspindel erzeugt werden kann.

Nach Ausführung dieses Arbeitsschritts wird das scheibenförmige Bauteil aus der Einrichtung entnommen und einem Spritzgusswerkzeug zugeführt. In dem Formenhohlraum des Spritzgusswerkzeuges wird das scheibenförmige Bauteil so positioniert, das es mit seiner Außenkontur an der Kontur der Form anliegt. Zumindest mit der Planfläche, in die die konzentrische Bohrung mit dem Hinterschnitt eingebracht ist, ist das scheibenförmige Bauteil zum verbleibenden Formenhohlraum hin orientiert.

Nach dem Schließen der Form erfolgt die Einspritzung einer definierten Menge eines schäumbaren Kunststoffes oder eines schäumbaren Kunststoffgemisches. Dasselbe füllt sowohl den verbliebenen Formenhohlraum als auch die konzentrische Bohrung mit dem Hinterschnitt vollständig aus.

Nachdem der Stopfen bis zu einer Mindestfestigkeit teilausgehärtet ist, wird das Spritzgusswerkzeug geöffnet und der fertiggestellte T-Korken ausgeworfen.

Das Verfahren kann auf verschiedene Weise abgeändert werden, ohne dass dies auf die erfindungsgemäße Lösung insgesamt Einfluss hat.

Das scheibenförmige Bauteil kann aus stangenförmigem oder aus plattenförmigem Ausgangsmaterial durch spanende Bearbeitung erzeugt werden.

Es kann vorteilhaft sein, das scheibenförmige Bauteil durch Urformen zu erzeugen. Beispielsweise besteht die Möglichkeit, ein scheibenförmiges Bauteil durch Pressen geeigneter Werkstoffe zu erzeugen. Hierbei kommen bindemittelhaltige Gemische aus Holzpartikeln ebenso in Betracht, wie mineralische, duroplastische oder thermoplastische Werkstoffe.

Beim Pressvorgang kann die konzentrische Bohrung bereits mit ausgeformt werden.

Es ist möglich, das scheibenförmige Bauteil durch Gießen aus metallischen, keramischen Werkstoffen oder Kunststoffen zu erzeugen, wobei auch hier die konzentrische Bohrung bereits ausgeformt werden kann.

Eine weitere Möglichkeit besteht darin, das scheibenförmige Bauteil aus Glas zu fertigen.

Der Hinterschnitt kann so ausgeführt sein, dass das Arbeitswerkzeug zunächst in eine und anschließend in die Gegenrichtung geführt wird, sodass durch diese Pendelbewegung zwei einander gegenüberliegende Hinterschnitte ausgeführt werden.

Das Arbeitswerkzeug kann mit Hilfe einer Steuerung so geführt werden, dass es mehrere Hinterschnitte über den Umfang der koaxialen Bohrung verteilt ausführt.

Der Durchmesser des Arbeitswerkzeugs kann ebenso wie der Durchmesser der Arbeitsspindel zur koaxialen Bohrung optimiert werden. Auf diese Weise kann eine große Zahl von Hinterschnitten erreicht werden.

Es kann bei ausreichender Anzahl von Hinterschnitten ein teilweises Überlagern der Hinterschnitte erfolgen, sodass zwischen den Hinterschnitten im scheibenförmigen Bauteil zahnförmige Gebilde entstehen. Es ist ebenso möglich, die Form einer Blütenrosette, eines Kleeblatts oder eine Polygonform zu erzeugen.

Mit Hilfe einer Steuerung kann das Arbeitswerkzeug auch so gesteuert werden, dass die Kontur einer Wellenlinie entsteht.

Es sind ebenso Hinterschnitte ausführbar, die kreisbogenförmig verlaufen, jedoch nicht den gesamten Umfang der konzentrischen Bohrung erfassen.

Beim Spritzgießen zum Erzeugen des Stopfens kann in einer besonderen Ausführungsform eine äußere Schutzschicht am Stopfen zusätzlich erzeugt werden.

Die Herstellung eines T-Korken mit einer Kindersicherung erfolgt im Wesentlichen nach dem gleichen Verfahren. Bei der Erzeugung der Hinterschnitte wird allerdings darauf geachtet, dass keine tiefen Einschnitte und keine abrupten Übergänge zwischen benachbarten Formen realisiert werden.

Die Hinterschnitte werden bevorzugt bogenförmig oder wellenförmig ausgeführt. Der Durchmesser der Arbeitswerkzeuge ist so gewählt, dass diese noch in die konzentrische Bohrung eingeführt werden können.

Nach der Erfindung wird ein Verfahren ausgeführt, bei dem in einem zusätzlichen Arbeitsschritt eine wenigstens einseitig hinterschnittene Bohrung erzeugt wird.

Nach der Erfindung wird zunächst ein scheibenförmiges Bauteil aus Holzwerkstoffen durch spanende Formgebung der Außenkontur und Einbringen einer konzentrischen Bohrung in einer Fertigungseinrichtung erzeugt. Bevorzugt kommt hier ein auf die Bearbeitung von Holzwerkstoffen ausgelegter Drechselautomat zum Einsatz.

Alternativ kann auch ein scheibenförmiges Bauteil mit kreisförmiger Außenkontur aus Plattenmaterial erzeugt werden. Dieses kann beim Aussägen gleichzeitig die konzentrische Bohrung erhalten. Diese Möglichkeit kann beispielsweise bei der Verarbeitung von Lagenschichtholz, Kunststoffplatten und dergleichen eingesetzt werden.

Erfindungsgemäß wird das erhaltene scheibenförmige Bauteil danach einer Einrichtung zugeführt, die am Bohrungsgrund der konzentrischen Bohrung einen Hinterschnitt ausführt.

Der Hinterschnitt wird partiell ausgeführt, so dass kein umlaufender Hinterschnitt vorhanden ist. Das scheibenförmige Bauteil wird dazu in der Einrichtung eingespannt und eine Spindeleinheit wird mit ihrer Arbeitsspindel bis zum Bohrungsgrund ausgefahren. Am vorderen Ende der Arbeitsspindel trägt diese ein Fräswerkzeug oder ein Kreissägeblatt. Nach Erreichen der Arbeitsposition wird die Arbeitsspindel seitlich bewegt, wodurch der Hinterschnitt der konzentrischen Bohrung entsteht.

Der Hinterschnitt kann so ausgeführt sein, dass er zwischen der konzentrischen Bohrung und dem Hinterschnitt möglichst keine abrupten Übergänge aufweist.

Dies kann beispielsweise dadurch erfolgen, dass ein Fräswerkzeug mit einem großen Durchmesser verwendet wird. Dieser kann so gewählt werden, dass das Fräswerkzeug gerade noch in die konzentrische Bohrung eingeführt werden kann. Im Ergebnis entsteht ein Hinterschnitt, der mit der konzentrischen Bohrung in etwa einen ei- oder ovalförmigen Querschnitt erzeugt.

Bevorzugt wird ein zweifacher Hinterschnitt, der durch Hin- und Her-Bewegung der Arbeitsspindel erzeugt werden kann.

Nach Ausführung dieses Arbeitsschritts wird das scheibenförmige Bauteil aus der Einrichtung entnommen und einem Spritzgusswerkzeug zugeführt. In dem Formenhohlraum des Spritzgusswerkzeuges wird das scheibenförmige Bauteil so positioniert, dass es mit seiner Außenkontur an der Kontur der Form anliegt. Zumindest mit der Planfläche, in die die konzentrische Bohrung mit dem Hinterschnitt eingebracht ist, ist das scheibenförmige Bauteil zum verbleibenden Formenhohlraum hin orientiert.

Nach dem Schließen der Form erfolgt die Einspritzung einer definierten Menge eines schäumbaren Kunststoffes oder eines schäumbaren Kunststoffgemisches. Dasselbe füllt sowohl den verbliebenen Formenhohlraum als auch die konzentrische Bohrung mit dem Hinterschnitt vollständig aus.

Nachdem der Stopfen bis zu einer Mindestfestigkeit teilausgehärtet ist, wird das Spritzgusswerkzeug geöffnet und der fertiggestellte T-Korken ausgeworfen.

Der Hinterschnitt kann so ausgeführt sein, dass das Arbeitswerkzeug zunächst in eine und anschließend in die Gegenrichtung geführt wird, so dass durch diese Pendelbewegung zwei einander gegenüberliegende Hinterschnitte ausgeführt werden.

Das Arbeitswerkzeug kann mit Hilfe einer Steuerung so geführt werden, dass es mehrere Hinterschnitte über den Umfang der koaxialen Bohrung verteilt ausführt.

Der Durchmesser des Arbeitswerkzeugs kann ebenso wie der Durchmesser der Arbeitsspindel zur koaxialen Bohrung optimiert werden. Auf diese Weise kann eine große Zahl von Hinterschnitten erreicht werden.

Mit Hilfe einer Steuerung kann das Arbeitswerkzeug auch so gesteuert werden, dass die Kontur einer Wellenlinie entsteht.

Es sind ebenso Hinterschnitte ausführbar, die kreisbogenförmig verlaufen, jedoch nicht den gesamten Umfang der konzentrischen Bohrung erfassen.

Bei einer bevorzugten Ausführungsform des Verfahrens werden Werkzeuge mit gegenüber dem Durchmesser der konzentrischen Bohrung kleinerem Durchmesser eingesetzt. Mit deren Hilfe wird ein tangential oder spiralförmig geführter Hinterschnitt ausgeführt. Dieser hat gegenüber radial ausgeführten Hinterschnitten an einem Ende einen weichen Übergang zur konzentrischen Bohrung und an seinem anderen Ende einen harten Übergang.

Eine bevorzugte Ausführungsform des Verfahrens sieht das Einbringen von zwei einander gegenüber liegenden tangential oder spiralförmig eingebrachten Hinterschnitten vor. Diese sind zugleich gegenseitig profiliert, so dass die harten Übergänge den Widerstand gegen das Verdrehen bestimmen.

Der erfindungsgemäße T-Korken mit Kindersicherung ist dadurch gekennzeichnet, dass er wenigstens einen Hinterschnitt hat, der im Bohrungsgrund der konzentrischen Bohrung deren Querschnitt erweitert und auf diese Weise für den angeformten Stopfen Formschluss erzeugt. Weiter dadurch, dass der Hinterschnitt so ausgeführt ist, dass er einen betragsmäßig kleinen Querschnittszuwachs zum Bohrungsquerschnitt bringt und die Nachgiebigkeit des ausgeschäumten Stopfens es erlaubt, den erweiterten Querschnitt so weit zu deformieren, dass der Stopfen im scheibenförmigen Bauteil drehbar wird. Sobald der Stopfen die Ausgangsposition wieder erreicht, federt er wieder in den Hinterschnitt ein.

Eine weitere Ausführungsform ist dadurch gekennzeichnet, dass der Hinterschnitt nicht sehr tief, dafür jedoch über einen größeren Umfangsbereich der konzentrischen Bohrung geführt ist.

Es ist ebenso möglich, mehr als einen Hinterschnitt der oben beschriebenen Arten anzuordnen.

Bei dem erfindungsgemäßen T-Korken mit Kindersicherung ergibt sich damit die Möglichkeit zur Optimierung. Diese kann unter Einbeziehung der Querschnittsformen, der Anzahl der Hinterschnitte, der Anzahl und Form etwaiger vorspringender Kanten, der geometrischen Abmessungen des Hinterschnitts/der Hinterschnitte, der durch den Stopfen erreichten Reibungskraft bei Haftreibung in der Flaschenöffnung und dem Elastizitätsmodul des schäumbaren Kunststoffs nach dem Ausschäumen so erfolgen, dass:
- Die Umfangskraft am scheibenförmigen Bauteil, die zur Einleitung der Drehbewegung notwendig ist, betragsmäßig kleiner ist, als die Reibungskraft des Stopfens in der Öffnung im Zustand der Haftreibung;
- bei Erreichen einer geeigneten Stellung des scheibenförmigen Bauteils relativ zum Stopfen durch das Einfedern des Stopfens in die Hinterschnitte ein fühlbarer Rastvorgang feststellbar ist;
- Personen mit ausreichender Körperkraft und Kenntnissen in der Lage sind, den T-Korken durch axiales Ziehen oder eine überlagerte Zieh- und Drehbewegung zu entfernen;
- der erfindungsgemäße T-Korken mehrfach verwendbar ist, ohne seine Funktionalität zu verlieren.

Es ist weiterhin möglich, den zylindrischen Ansatz des Stopfens bei entsprechender Ausgestaltung der Form in einer Wellenkontur, mit Nuten, mit einer konzentrischen Ausnehmung oder mit einer vor dem Schließen der Form eingelegten zylindrischen Hülse aus Naturkork oder ähnlichen Werkstoffen auszuformen.

Eine andere Ausführungsform des erfindungsgemäßen T-Korken ist so gestaltet, dass das Vorhandensein einer Kindersicherung am T-Korken sichtbar ist und damit eine Unterscheidungsmöglichkeit zu T-Korken, die der Normalbauform entsprechen, besteht. Damit ist im Bereich der Lagerhaltung eine einfache Unterscheidung dieses Typs eines T-Korken möglich.

Das Herstellungsverfahren erfolgt nach den gleichen Arbeitsschritten, wie oben beschrieben. Es wird allerdings ein Fräser verwendet, der in einer Sonderbauform sowohl im Bereich der Krone als auch im Bereich des Schaftes eine Verzahnung hat und mit beiden Elementen spanabhebend arbeiten kann.

Es ist weiterhin möglich, den zylindrischen Ansatz des Stopfens bei entsprechender Ausgestaltung der Form in einer Wellenkontur, mit Nuten, mit einer konzentrischen Ausnehmung oder mit einer vor dem Schließen der Form eingelegten zylindrischen Hülse aus Naturkork oder ähnlichen Werkstoffen auszuformen.

Die Erfindung wird nachstehend anhand einiger Ausführungsbeispiele und Zeichnungen näher erläutert. Dabei zeigen:
Fig. 1 - Einen T-Korken, wie er aus dem Stand der Technik bekannt ist, als Halbschnitt.
Fig. 2 - Eine Anordnung zur Bearbeitung eines scheibenförmigen Bauteils, wie sie aus dem Stand der Technik bekannt ist.
Fig. 3 - Eine Anordnung mit zwei eigenständigen Einrichtungen zur Bearbeitung des erfindungsgemäßen scheibenförmigen Bauteils.
Fig. 4 - Ein erfindungsgemäßes scheibenförmiges Bauteil in einer teilweise aufgebrochenen Darstellung.
Fig. 5 - Eine Ausführungsform des scheibenförmigen Bauteils mit 2 Hinterschnitten.
Fig. 6 - Eine weitere Ausführungsform des scheibenförmigen Bauteils mit 3 Hinterschnitten.
Fig. 7 - Eine Ausführungsform des scheibenförmigen Bauteils mit einem bogenförmigen Hinterschnitt.
Fig. 8 - Eine Ausführungsform des scheibenförmigen Bauteils mit einer Vielzahl von Hinterschnitten.
Fig. 9 - Der erfindungsgemäße T-Korken mit einer Kindersicherung als Halbschnitt.
Fig. 10 - Das scheibenförmige Bauteil des erfindungsgemäßen T-Korken in der Ansicht von unten und in einer teilweise aufgebrochenen Darstellung.
Fig. 11 - Eine Ausführungsform des scheibenförmigen Bauteils mit einem tangential geführten Hinterschnitt.

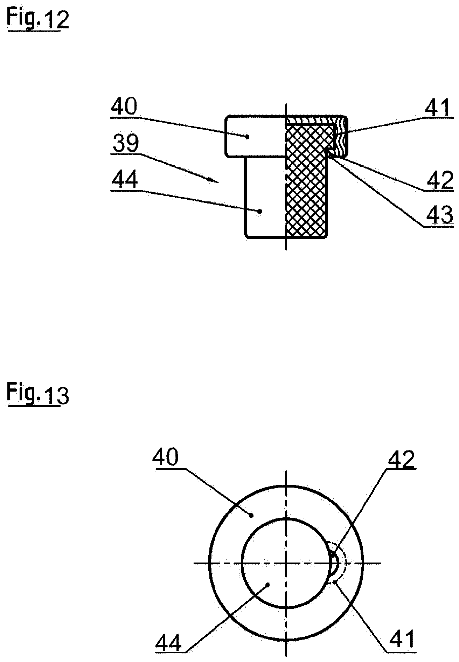

Fig. 12 - Eine Ausführungsform des erfindungsgemäßen T-Korken mit einem sichtbaren Sicherungselement in einer Darstellung als Halbschnitt.
Fig. 13 - Die gleiche Ausführungsform des T-Korken in einer Ansicht von unten.

Ein T-Korken **1** gemäß dem Stand der Technik besteht aus einem scheibenförmigen Bauteil **2** und einem mit diesem verbundenen Stopfen **3**, der in einem Formwerkzeug unter Verwendung eines schäumbaren Kunststoffes angeformt worden ist.

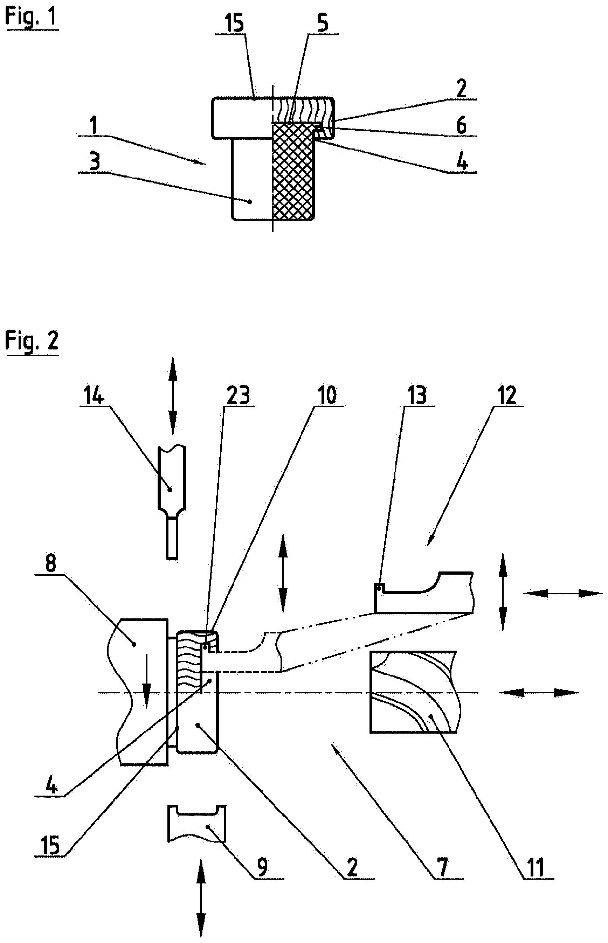

Um eine sichere Verbindung zwischen scheibenförmigem Bauteil **2** und Stopfen **3** zu erreichen, ist in das scheibenförmige Bauteil **2** eine konzentrische Bohrung **4** eingebracht. Weiterhin ist die Bohrung **4** am Bohrungsgrund **5** durch eine umlaufende Nut **6** hinterschnitten, so dass der schäumbare Kunststoff beim Füllen der Form in die Bohrung **4** und die Nut **6** hinein expandiert und in axialer Richtung Formschluss entsteht. Der in Fig. 1 dargestellte Aufbau entspricht dem Stand der Technik.

Das scheibenförmige Bauteil **2** wird gemäß dem Stand der Technik mit einer in Fig. 2 dargestellten Einrichtung **7** erzeugt. Aus einem Rohteil **8** wird mit einem geeigneten Formwerkzeug **9** die Außenkontur **10** des scheibenförmigen Bauteils **2** spanend bearbeitet. Gleichzeitig oder unmittelbar nach der Bearbeitung der Außenkontur **10** wird mit einem Bohrwerkzeug **11** die Bohrung **4** in das scheibenförmige Bauteil **2** eingebracht. Das Bohrwerkzeug **11** wird sodann sehr weit zurückgefahren, damit eine weitere Bearbeitungseinrichtung **12** zunächst quer zur Rotationsachse des scheibenförmigen Bauteils **2**, anschließend in Richtung scheibenförmiges Bauteil **2** bis zur Bearbeitungsposition gefahren und schließlich wieder seitwärts bewegt werden kann, wobei ein Formwerkzeug **13** die Nut **6** fertig bearbeitet. Anschließend muss die Bearbeitungseinrichtung **12** auf dem beschriebenen Weg zurückgefahren werden, damit sie beim nächsten Arbeitszyklus das Bohrwerkzeug **11** nicht behindert.

Anschließend wird mit einem Abstechwerkzeug **14** die Stirnseite **15** des scheibenförmigen Bauteils **2** bearbeitet und dabei dasselbe vom Rohteil **8** getrennt, wobei es zugleich aus der Einrichtung **7** herausfällt. Die oben beschriebene Einrichtung **7** entspricht der im Stand der Technik verwendeten.

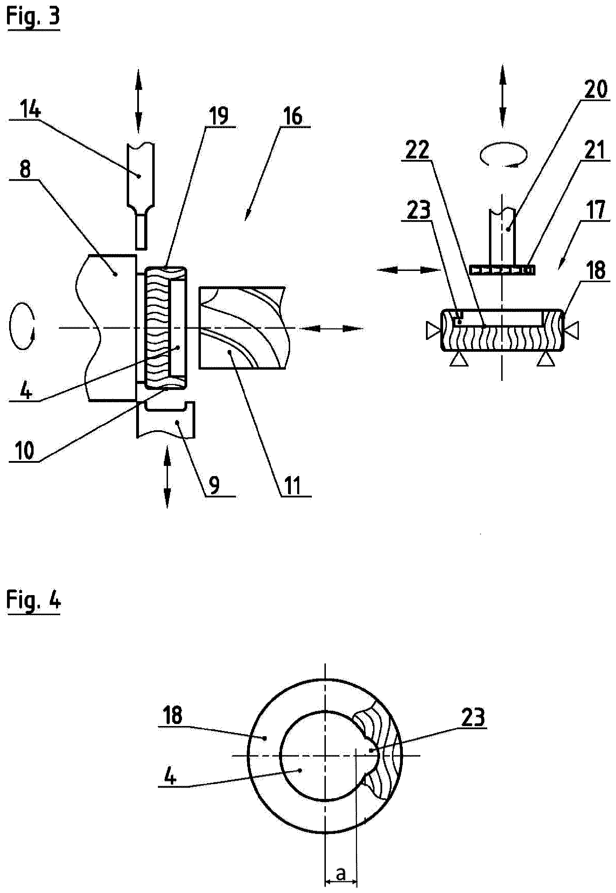

Fig. 3 zeigt die erfindungsgemäßen Einrichtungen **16** und **17** zur Bearbeitung des erfindungsgemäßen scheibenförmigen Bauteils **18**.

In der ersten Einrichtung **16**, die einer vereinfachten Einrichtung **7** entspricht, wird von einem Rohteil **8** eine Zwischenform **19** des scheibenförmigen Bauteils **18** durch Bearbeitung der Außenkontur **10** mit einem Formwerkzeug **9** spanend erzeugt. Mit einem Bohrwerkzeug **11** wird die Bohrung **4** eingebracht, wobei das Bohrwerkzeug **11** nur noch eine kurze Wegstrecke zurückzulegen hat. Mit dem Abstechwerkzeug **14** wird die Zwischenform **19** des scheibenförmigen Bauteils **18** vom Rohteil **8** getrennt und aus der Einrichtung **16** ausgeworfen.

In einer zweiten Einrichtung **17** wird die Zwischenform **19** wieder eingespannt, wobei es sich um eine einfache stehende Fixierung handelt. Ein Fräswerkzeug **20** wird in einem ersten Arbeitsschritt axial so weit verschoben, dass der Fräser **21** annähernd den Bohrungsgrund **22** der Bohrung **4** erreicht. In dieser Position wird das Fräswerkzeug **20** um einen Betrag a seitlich verschoben, so dass ein Hinterschnitt **23** der Bohrung **4** ausgeführt wird. Nach Ausführung des Hinterschnitts **23** und dem Zurückfahren des Fräswerkzeugs **20** wird das fertig bearbeitete scheibenförmige Bauteil **18** aus der Einrichtung **17** entfernt.

Das scheibenförmige Bauteil **18** wird dann wieder in ein Formwerkzeug eingelegt, liegt mit seiner Außenkontur **10** an einem Teil der Kontur der Form an und füllt den Formenhohlraum teilweise aus.

Nachfolgend wird der verbliebene Formenhohlraum mit einem schäumbaren Kunststoff gefüllt, expandiert und bildet eine innige Verbindung mit dem scheibenförmigen Bauteil **18** aus.

Der Hinterschnitt **23** ist nach der Herstellung des T-Korken **1** vollständig mit Kunststoff gefüllt. Daraus folgt, dass der T-Korken **1** nicht nur bei axialem Zug, sondern auch bei Drehbewegungen, eine formschlüssige Verbindung zwischen scheibenförmigem Bauteil **18** und Stopfen **3** hat.

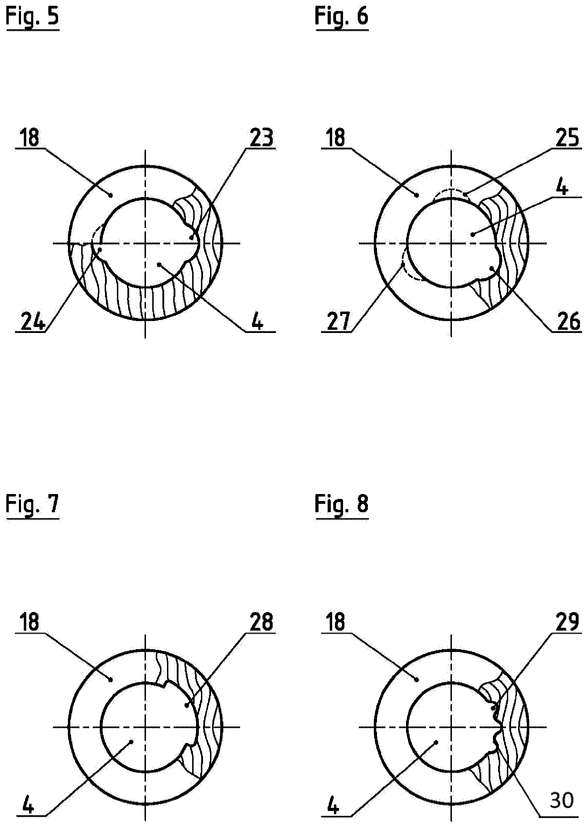

Fig. 5 zeigt eine weitere Ausgestaltungsform des scheibenförmigen Bauteils **18**. Bei dieser Ausgestaltung fährt das Fräswerkzeug **20** zusätzlich auch in die entgegengesetzte Richtung und erzeugt einen zweiten Hinterschnitt **24**.

Fig. 6 zeigt eine Ausgestaltungsform des scheibenförmigen Bauteils **18**, bei dem 3 Hinterschnitte **25**, **26** und **27** jeweils in einem Winkel von 120° zu einander eingebracht sind.

Fig. 7 zeigt eine Ausgestaltungsform des scheibenförmigen Bauteils **18**, wobei ein Hinterschnitt **28** in bogenförmiger Gestalt ausgeführt ist. Dieser entsteht entweder durch eine begrenzte Winkelbewegung der Einspannung des scheibenförmigen Bauteils **18** oder durch eine entsprechende Führung des Fräswerkzeugs **20**.

Fig. 8 zeigt eine Ausgestaltungsform des scheibenförmigen Bauteils **18**, bei der eine Mehrzahl Hinterschnitte **29** ausgeführt ist, die eine an eine Blütenform angenäherte Konturlinie **30** ergibt.

Die oben stehende Ausgestaltungsform kann wiederum durch Drehung der Einspannung des scheibenförmigen Bauteils **18** und mehrfache seitliche Verschiebung des Fräswerkzeugs **20** erzeugt werden. Ebenso kann ohne Bewegung der Einspannung des scheibenförmigen Bauteils **18** durch gezielte Steuerung des Fräswerkzeugs **20** eine gleiche Kontur erreicht werden. Ebenso durch Interaktion zwischen Einspannung und Fräswerkzeug **20**.

Wird bei der Ausführung der Hinterschnitte **29** eine Steuerung des Fräswerkzeugs **20** verwendet, die es erlaubt, dasselbe nach Koordinaten zu steuern, kann beispielsweise auch eine Wellenlinie ausgearbeitet werden. Es ist ebenso möglich, die Hinterschnitte **29** so zu positionieren, dass eine Art Innenverzahnung entsteht.

Der erfindungsgemäße T-Korken mit einer Kindersicherung **31** besteht aus einem scheibenförmigen Bauteil **32** und einem angeformten Stopfen **33**, wobei im Bereich der Bohrung **34** im scheibenförmigen Bauteil **32** ein kreisabschnitts- oder bogenförmiger Hinterschnitt **35** ausgeführt und derselbe mit dem Werkstoff des Stopfens **33** ausgefüllt ist.

Der erfindungsgemäße T-Korken mit einer Kindersicherung **31** kann in einer weiteren Ausführungsform aus einem scheibenförmigen Bauteil **32** mit einem Hinterschnitt **36** versehen sein, wobei dieser auch mehrfach über den Umfang der Bohrung **34** verteilt angeordnet sein kann.

Bei einer weiteren Ausführungsform des erfindungsgemäßen T-Korken **31** ist die vorhandene Mehrzahl an Hinterschnitten **35, 36** so über den Umfang der Bohrung **34** verteilt angeordnet, dass sich eine bogen-, blüten-, kleeblatt-, polygon- oder wellenförmige Konturlinie ausbildet.

Gegenüber den aus dem Stand der Technik bekannten T-Korken ergeben sich bei der Ausführung der Erfindung mehrere Vorteile. Das Herstellungsverfahren vereinfacht sich dadurch, dass an Stelle der Komplettbearbeitung des scheibenförmigen Bauteils mit zwei voneinander unabhängigen arbeitenden Einrichtungen gearbeitet wird. Die Taktzeiten reduzieren sich durch die Vermeidung von unproduktiven Wegezeiten der Werkzeuge einerseits und die gleichzeitige Bearbeitung von zwei Teilen in voneinander getrennten Einrichtungen andererseits.

Das mit ausschäumbarem Kunststoff zu füllende Volumen ist reduziert, da keine umlaufende Nut mehr gefüllt wird. Zudem ist eine Optimierung zwischen Art und Profil der Hinterschneidungen, den Eigenschaften des schäumbaren Kunststoffes und der Einspritzmenge möglich.

Um eine sichere Verbindung zwischen scheibenförmigem Bauteil **32** und Stopfen **33** zu erreichen, ist in das scheibenförmige Bauteil **32** eine konzentrische Bohrung **34** eingebracht. Weiterhin ist die Bohrung **34** am Bohrungsgrund hinterschnitten, so dass der schäumbare Kunststoff beim Füllen der Form in die Bohrung **34** und die Nut **6** hinein expandiert und in axialer Richtung Formschluss entsteht. Der in Fig. 1 dargestellte Aufbau entspricht dem Stand der Technik.

Das scheibenförmige Bauteil **32** wird mit einer in Fig. 2 dargestellten Einrichtung **7** erzeugt. Aus einem Rohteil **8** wird mit einem geeigneten Formwerkzeug **9** die Außenkontur **10** des scheibenförmigen Bauteils **32** spanend bearbeitet. Gleichzeitig oder unmittelbar nach der Bearbeitung der Außenkontur **10** wird mit einem Bohrwerkzeug **11** die Bohrung **34** in das scheibenförmige Bauteil **32** eingebracht. Das Bohrwerkzeug **11** wird sodann sehr weit zurückgefahren, damit eine weitere Bearbeitungseinrichtung **12** zunächst quer zur Rotationsachse des scheibenförmigen Bauteils **32**, anschließend in Richtung scheibenförmiges Bauteil **32** bis zur Bearbeitungsposition gefahren und schließlich wieder seitwärts bewegt wird, wobei ein Formwerkzeug **13** die Nut **6** fertig bearbeitet. Anschließend muss die Bearbeitungseinrichtung **12** auf dem beschriebenen Weg zurückgefahren werden, damit sie beim nächsten Arbeitszyklus das Bohrwerkzeug **11** nicht behindert.

Anschließend wird mit einem Abstechwerkzeug **14** die Stirnseite **15** des scheibenförmigen Bauteils **32** bearbeitet und dabei dasselbe vom Rohteil **8** getrennt, wobei es zugleich aus der Einrichtung **7** herausfällt. Die oben beschriebene Einrichtung **7** entspricht der im Stand der Technik verwendeten.

Fig. 3 zeigt die erfindungsgemäßen Einrichtungen **16** und **17** zur Bearbeitung des erfindungsgemäßen scheibenförmigen Bauteils **32**.

In der ersten Einrichtung **16**, die einer vereinfachten Einrichtung **7** entspricht, wird von einem Rohteil **8** eine Zwischenform **19** des scheibenförmigen Bauteils **32** durch Bearbeitung der Außenkontur **10** mit einem Formwerkzeug **9** spanend erzeugt. Mit einem Bohrwerkzeug **11** wird die Bohrung **34** eingebracht, wobei das Bohrwerkzeug **11** nur noch eine kurze Wegstrecke zurückzulegen hat. Mit dem Abstechwerkzeug **14** wird eine Zwischenform des scheibenförmigen Bauteils **32** vom Rohteil **8** getrennt und anschließend aus der Einrichtung **16** entfernt.

In einer zweiten Einrichtung **17** wird die Zwischenform wieder eingespannt, wobei es sich um eine einfache stehende Fixierung handelt. Ein Fräswerkzeug **20** wird in einem ersten Arbeitsschritt axial so weit verschoben, dass der Fräser **21** annähernd den Bohrungsgrund der Bohrung **34** erreicht. In dieser Position wird das Fräswerkzeug **20** um einen Betrag a seitlich verschoben, so dass ein Hinterschnitt **35** der Bohrung **34** ausgeführt wird. Der Hinterschnitt **35** hat ein im Wesentlichen bogenförmiges Profil. Dieses entsteht durch die Verwendung eines Fräsers **21** mit einem größeren Durchmesser. Das entstehende Querschnittsprofil, das sich aus dem Querschnitt der konzentrischen Bohrung **34** und dem Querschnitt des Hinterschnitts **35** zusammensetzt, ist in etwa ei- oder ovalförmig. Nach Ausführung des Hinterschnitts **35** und dem Zurückfahren des Fräswerkzeugs **20** wird das fertig bearbeitete scheibenförmige Bauteil **32** aus der Einrichtung **17** entfernt.

Das scheibenförmige Bauteil **32** wird dann wieder in ein Formwerkzeug eingelegt, liegt mit seiner Außenkontur an einem Teil der Kontur der Form an und füllt den Formenhohlraum teilweise aus.

Nachfolgend wird der verbliebene Formenhohlraum mit einem schäumbaren Kunststoff gefüllt, expandiert und bildet eine innige Verbindung mit dem scheibenförmigen Bauteil **32** aus.

Der Hinterschnitt **35** ist nach der Herstellung des T-Korken **31** vollständig mit Kunststoff gefüllt. Daraus folgt, dass der T-Korken **31** zunächst nicht nur bei axialem Zug, sondern auch bei Drehbewegungen, eine formschlüssige Verbindung zwischen scheibenförmigem Bauteil **32** und Stopfen **33** hat.

Bei einer anderen Ausführungsform des erfindungsgemäßen Verfahrens, bei deren Anwendung T-Korken mit einer Kindersicherung **31** erzeugt werden, kommt in der Einrichtung **17** ein gestuftes Fräswerkzeug **20** zur Anwendung. Das Fräswerkzeug **20** ist auch im Bereich der Spindel mit Schneiden versehen.

Beim Einsatz des gestuften Fräswerkzeugs **20** wird zusätzlich zum Hinterschnitt **41** eine Einfräsung **42** im scheibenförmigen Bauteil **32** ausgeführt.

Die Einfräsung **42** wird nachfolgend, wie oben beschrieben, ebenfalls mit schäumbarem Kunststoff ausgefüllt. Der betreffende Hohlraum ist dem entsprechend materialeinheitlich mit dem Stopfen **33** und dem Hinterschnitt **36** verbunden.

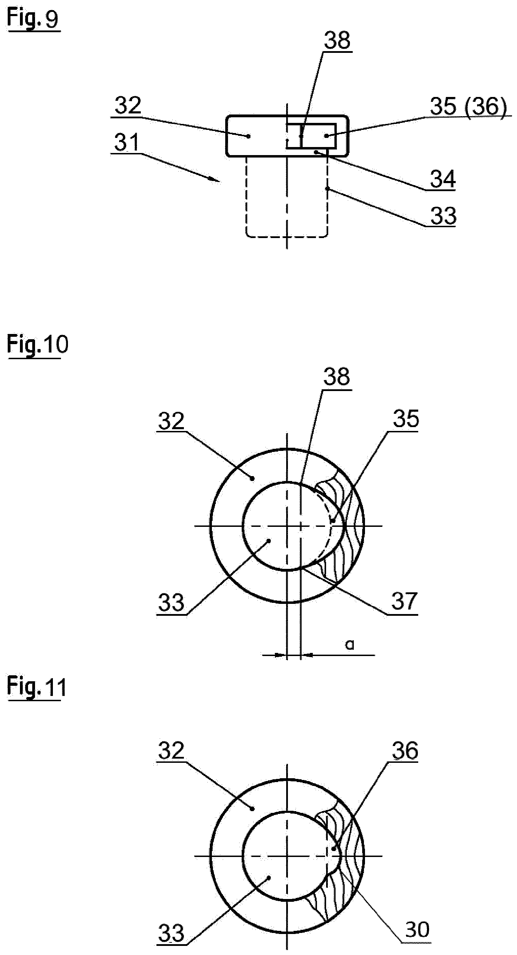

Fig. 9 und 10 zeigen Ausgestaltungsformen des scheibenförmigen Bauteils **32** mit einer Kindersicherung. Es wird ein Hinterschnitt **35** ausgeführt, der einen größeren Radius hat, wodurch sich ein in etwa gleichförmiger Querschnitt aus konzentrischer Bohrung **34** und Hinterschnitt **35** ergibt. Das Zentrum des Hinterschnitts **35** ist gegenüber dem Mittelpunkt der konzentrischen Bohrung **34** um den Betrag a seitlich verschoben.

Die oben beschriebene Ausführungsform des Hinterschnitts **35** führt an den Übergangsstellen **37** und **38** zu weichen Übergängen. Damit ist die Verformung des Stopfens **33** in diesem Bereich gering, gewaltsame Verformungen bei Verdrehungen des scheibenförmigen Bauteils **32** werden vermieden; trotzdem ist beim Drehen des scheibenförmigen Bauteils **32** ein fühlbares Einrasten bemerkbar, wenn scheibenförmiges Bauteil **32** und Stopfen **33** wieder in der Sollstellung zueinander stehen.

In Fig. 11 ist eine Ausführungsform des T-Korken **31** mit einer Kindersicherung gezeigt, die in beiden möglichen Drehrichtungen des scheibenförmigen Bauteils **32** betragsmäßig unterschiedliche Drehmomente erfordert. Dazu wird ein Hinterschnitt **36** mit einem Fräswerkzeug **20** mit kleinerem Durchmesser ausgeführt, das entweder tangential oder spiralförmig geführt wird. Im Ergebnis ist der Hinterschnitt **36** in Fig. 11 bei Drehung im Uhrzeigersinn mit einem großen Widerstand und bei einer Drehung entgegen dem Uhrzeigersinn mit einem geringen Widerstand drehbar.

Die in Fig. 9 bis Fig. 11 gezeigten Ausführungsformen für die Hinterschnitte **35** und **36** können auch mehrfach angeordnet sein.

Eine bevorzugte Ausführungsform des erfindungsgemäßen T-Korken mit einer Kindersicherung **31** sieht vor, gegenüberliegend und in gegensinniger Anordnung zwei Hinterschnitte **35** oder **36** anzuordnen. Diese Anordnung ermöglicht es, mit vergleichsweise klein dimensionierten Hinterschnitten **35** oder **36** die geforderten Wirkungen zu erreichen. Insbesondere ist es vorteilhaft, dass nur ein geringer Volumenzuwachs für den Stopfen **33** entsteht, weshalb die zusätzlich benötigte Menge an schäumbarem Kunststoff gering bleibt.

Wird bei der Ausführung der Hinterschnitte eine Steuerung des Fräswerkzeugs **20** verwendet, die es erlaubt, dasselbe nach Koordinaten zu steuern, kann beispielsweise auch eine Wellenlinie ausgearbeitet werden. Dabei kann erreicht werden, dass mehrere Rasteffekte fühlbar sind.

Der erfindungsgemäße T-Korken mit einer Kindersicherung **31** besteht aus einem scheibenförmigen Bauteil **32** und einem angeformten Stopfen **33**, wobei im Bereich der Bohrung **34** im scheibenförmigen Bauteil **32** ein kreisabschnitts- oder bogenförmiger Hinterschnitt **35** oder **36** ausgeführt und derselbe mit dem Werkstoff des Stopfens **33** ausgefüllt ist.

Gegenüber den aus dem Stand der Technik bekannten T-Korken ergeben sich bei der Ausführung der Erfindung mehrere Vorteile. Das Herstellungsverfahren vereinfacht sich dadurch, dass an Stelle der Komplettbearbeitung des scheibenförmigen Bauteils mit zwei voneinander unabhängig arbeitenden Einrichtungen gearbeitet wird. Die Taktzeiten reduzieren sich durch die Vermeidung von unproduktiven Wegezeiten der Werkzeuge. Die gleichzeitige Bearbeitung von zwei Teilen in voneinander getrennten Einrichtungen verdoppelt den Ausstoß.

Das mit ausschäumbarem Kunststoff zu füllende Volumen ist reduziert, da keine umlaufende Nut mehr gefüllt wird. Zudem ist eine Optimierung zwischen Art und Profil der Hinterschneidungen, den Eigenschaften des schäumbaren Kunststoffes und der Einspritzmenge möglich.

Die Erfindung hat also den Vorteil, dass sie bei den bekannten T-Korken die Ausführung einer Kontaktfläche zwischen dem scheibenförmigen Bauteil und dem angeformten Stopfen ermöglicht, die sowohl in axialer als auch in Drehrichtung Formschluss gewährleistet und damit eine größere Sicherheit beim Entfernen der T-Korken bietet.

### Bezugszeichenliste

- 1: T-Korken
- 2: Scheibenförmiges Bauteil
- 3: Stopfen
- 4: Bohrung
- 5: Bohrungsgrund
- 6: Nut
- 7: Einrichtung
- 8: Rohteil
- 9: Formwerkzeug
- 10: Außenkontur
- 11: Bohrwerkzeug
- 12: Bearbeitungseinrichtung
- 13: Formwerkzeug
- 14: Abstechwerkzeug
- 15: Stirnseite
- 16: Einrichtung
- 17: Einrichtung
- 18: Scheibenförmiges Bauteil
- 19: Zwischenform
- 20: Fräswerkzeug
- 21: Fräser
- 22: Bohrungsgrund
- 23: Hinterschnitt
- 24: Hinterschnitt
- 25: Hinterschnitt
- 26: Hinterschnitt
- 27: Hinterschnitt
- 28: Hinterschnitt
- 29: Hinterschnitt
- 30: Konturlinie
- 31: T-Korken
- 32: Scheibenförmiges Bauteil
- 33: Stopfen
- 34: Bohrung
- 35: Hinterschnitt
- 36: Hinterschnitt
- 37: Übergangsstelle
- 38: Übergangsstelle
- 39: T-Korken
- 40: Scheibenförmiges Bauteil
- 41: Hinterschnitt
- 42: Einfräsung
- 43: Rand
- 44: Stopfen

## Patentansprüche

1. Verfahren zur Herstellung eines T-Korken (1), wobei derselbe aus:
einem scheibenförmigen Bauteil (18),
und einem Stopfen (3), der durch ein Urformverfahren erzeugt ist, besteht,
wobei
das scheibenförmige Bauteil (18) eine Bohrung (4) mit einem Hinterschnitt aufweist, in deren Bereich die Verbindung zwischen diesem und dem Stopfen (3) ausgeführt ist,
wobei der T-Korken durch eine Anzahl nacheinander, sich zeitlich überlagernder oder gleichzeitig erfolgender Arbeitsschritte herstellbar ist, dergestalt, dass:
- in einem ersten Arbeitszyklus in einer Einrichtung (16) von einem Ausgangsmaterial ein scheibenförmiges Bauteil (18) erzeugt und dessen Außenkontur (10) allseitig bearbeitet wird,
- gleichzeitig in eine Stirnseite (15) des scheibenförmigen Bauteils (18) eine zylindrische Bohrung (4) endlicher Tiefe eingebracht
- und das scheibenförmige Bauteil (18) ausgeworfen wird,
- nachfolgend in einem zweiten Arbeitszyklus mit einer Einrichtung (17) in etwa im Bereich des Bohrungsgrundes (22) des scheibenförmigen Bauteils (18) eine spanende Bearbeitung erfolgt, durch die wenigstens ein partieller, nicht umlaufender, Hinterschnitt erzeugt wird, wobei dieser asymmetrisch zur Bohrung (4) ausgeführt wird,
- in einem dritten Arbeitszyklus das scheibenförmige Bauteil (18) einem Formwerkzeug (13) zugeführt wird, in diesem so positioniert wird, dass es mit seiner Außenseite in einem Gesenk positioniert ist, zumindest mit der Bohrung (4) Verbindung mit dem verbleibenden Hohlraum des Formwerkzeugs besteht und nachfolgend ein schäumbares Kunststoffmaterial eingespritzt, ausgeschäumt und damit der verbliebene Formhohlraum und die konzentrische Bohrung (4) mit dem Hinterschnitt vollständig ausgefüllt wird, dergestalt, dass an das scheibenförmige Bauteil (18) ein Stopfen (3), bestehend aus ausgeschäumtem Kunststoff angeformt wird.

2. Verfahren zur Herstellung eines T-Korken (1; 31; 39) mit einer Kindersicherung, wobei derselbe aus:
einem scheibenförmigen Bauteil (18; 32; 40),
und einem Stopfen (3; 33; 44), der durch ein Urformverfahren erzeugt ist, besteht,
wobei
das scheibenförmige Bauteil (18; 32; 40) eine Bohrung (4) mit einem Hinterschnitt aufweist, in dessen Bereich die Verbindung zwischen diesem und dem Stopfen (3; 33; 44) ausgeführt ist,
und dabei zugleich die Kindersicherung ausgebildet wird, wobei der T-Korken (1; 31; 39) durch eine Anzahl nacheinander, sich zeitlich überlagernder oder gleichzeitig erfolgender Arbeitsschritte herstellbar ist, dergestalt, dass:
- in einem ersten Arbeitszyklus in einer Einrichtung (16) von einem Ausgangsmaterial ein scheibenförmiges Bauteil (18; 32; 40) erzeugt und dessen Außenkontur (10) allseitig bearbeitet wird,
- gleichzeitig in eine Stirnseite (15) des scheibenförmigen Bauteils (18; 32; 40) eine zylindrische Bohrung (4; 34) endlicher Tiefe eingebracht
- und das scheibenförmige Bauteil (18; 32; 40) ausgeworfen wird,
- nachfolgend in einem zweiten Arbeitszyklus mit einer Einrichtung (17) in etwa im Bereich des Bohrungsgrundes (5) des scheibenförmigen Bauteils (18; 32; 40) eine spanende Bearbeitung erfolgt, durch die wenigstens ein partieller, nicht umlaufender, Hinterschnitt (23; 24; 25; 26; 27; 28; 29; 35; 36) erzeugt und zur Bohrung (4; 34) seitlich versetzt ausgeführt wird,
- in einem dritten Arbeitszyklus das scheibenförmige Bauteil (18; 32; 40) einem Formwerkzeug zugeführt und in diesem so positioniert wird, das es mit seiner Außenseite in einem Gesenk liegt, zumindest mit der Bohrung (4; 34) Verbindung mit dem verbleibenden Hohlraum des Formwerkzeugs besteht und nachfolgend ein schäumbares Kunststoffmaterial eingespritzt, ausgeschäumt und damit der verbliebene Formhohlraum, die Bohrung (4; 34) und der Hinterschnitt (23; 24; 25; 26; 27; 28; 29; 35; 36) vollständig ausgefüllt werden, dergestalt, dass an das scheibenförmige Bauteil (18; 32; 40) ein Stopfen (3; 33; 44), bestehend aus ausgeschäumtem Kunststoff, angeformt wird,
und die Kindersicherung dergestalt ausgebildet ist, dass bei der Einleitung einer Drehbewegung am scheibenförmigen Bauteil (18; 32; 40) mit einer Umfangskraft, die betragsmäßig kleiner ist, als die Reibungskraft des Stopfens (3; 33; 44) in einer Flaschenöffnung im Zustand der Haftreibung, die feste Verbindung zwischen dem scheibenförmigen Bauteil (18; 32; 40) und dem Stopfen (3; 33; 44) zerstört wird und das scheibenförmige Bauteil (18; 32; 40) gegenüber dem Stopfen (3; 33; 44) drehbar wird.

3. Verfahren zur Herstellung eines T-Korken (1) oder eines T-Korken (1; 31; 39) mit einer Kindersicherung nach einem der Patentansprüche 1 oder 2,
**dadurch gekennzeichnet, dass**
das scheibenförmige Bauteil (18; 32; 40) im ersten Arbeitszyklus durch spanende Bearbeitung aus stangenförmigem oder plattenförmigem Material erzeugt wird.

4. Verfahren zur Herstellung eines T-Korken (1) oder eines T-Korken (1; 31; 39) mit einer Kindersicherung nach einem der Patentansprüche 1 oder 2,
**dadurch gekennzeichnet, dass**
das scheibenförmige Bauteil (18; 32; 40) im ersten Arbeitszyklus durch Urformen erzeugt wird.

5. Verfahren zur Herstellung eines T-Korken (1) oder eines T-Korken (1; 31; 39) mit einer Kindersicherung nach einem der Patentansprüche 1 oder 2,
**dadurch gekennzeichnet, dass**
im zweiten Arbeitszyklus die Bohrung (4) im scheibenförmigen Bauteil (18) im Bohrungsgrund (22) einen Hinterschnitt (23) erhält, indem ein Fräswerkzeug (20) in die konzentrische Bohrung (4) einfährt und nach Erreichen der Arbeitsposition wenigstens einmal soweit seitlich ausgelenkt wird, dass mit Hilfe des Arbeitswerkzeuges spanend ein Hinterschnitt (23) erzeugt wird.

6. Verfahren zur Herstellung eines T-Korken (1) oder eines T-Korken (1; 31; 39) mit einer Kindersicherung nach Patentanspruch 5,
**dadurch gekennzeichnet, dass**
das Fräswerkzeug (20) nachfolgend in entgegengesetzter Richtung ausgelenkt wird und spanend ein zweiter Hinterschnitt (24) erzeugt wird.

7. Verfahren zur Herstellung eines T-Korken (1) oder eines T-Korken (1; 31; 39) mit einer Kindersicherung nach Patentanspruch 5,
**dadurch gekennzeichnet, dass**
das Fräswerkzeug (20) in mehr als zwei Richtungen ausgelenkt und spanend mehr als zwei Hinterschnitte erzeugt werden.

8. Verfahren zur Herstellung eines T-Korken (1) und/oder eines T-Korken (1; 31; 39) mit einer Kindersicherung nach Patentanspruch 5,
**dadurch gekennzeichnet, dass**
das Fräswerkzeug (20) mit einer Steuerung geführt wird und polygon-, blüten-, kleeblatt-, stern-, bogen-, wellen- oder zahnförmige Hinterschnitte ausführt.

9. Verfahren zur Herstellung eines T-Korken (1; 31; 39) mit einer Kindersicherung nach einem der Patentansprüche 2 bis 8,
**dadurch gekennzeichnet, dass**
im zweiten Arbeitszyklus ein Fräswerkzeug (20) in gestufter Ausführung, das auch im Bereich des Fräserschaftes spanabhebend arbeitet, eingesetzt wird und das Fräswerkzeug (20) so bewegt und/oder gesteuert wird, dass bei der Ausführung eines Hinterschnitts (41) eine Einfräsung (42) im Rand (43) des scheibenförmigen Bauteils (40) ausgeführt wird.

10. T-Korken, hergestellt nach dem Verfahren gemäß Patentanspruch 1, bestehend aus einem scheibenförmigen Bauteil (18) mit einer konzentrischen Bohrung (4) und einem angeformten Stopfen (3), der im Bereich der konzentrischen Bohrung (4) mit dem scheibenförmigen Bauteil (18) verbunden ist, wobei im Bereich des Bohrungsgrundes (22) wenigstens ein partieller, nicht umlaufender, kreisabschnitts- (23) oder bogenförmiger Hinterschnitt angeordnet und dieser mit dem Werkstoff des Stopfens (3) ausgefüllt ist.

11. T-Korken nach Patentanspruch 10,
**dadurch gekennzeichnet, dass**
im Bereich des Bohrungsgrundes (5) mehrere Hinterschnitte einander gegenüberliegend oder über den Umfang der koaxialen Bohrung (4) verteilt angeordnet und diese mit dem Werkstoff des Stopfens (3) ausgefüllt sind.

12. T-Korken nach Patentanspruch 11,
**dadurch gekennzeichnet, dass**
durch die mehreren Hinterschnitte eine bogen-, blüten-, kleeblatt-, polygon-, wellen- oder verzahnungsähnliche Konturlinie (30) ausgebildet ist.

13. T-Korken (31; 39) mit einer Kindersicherung, hergestellt nach einem Verfahren gemäß einem der Patentansprüche 2 bis 9,
bestehend aus einem scheibenförmigen Bauteil (32; 40) mit einer konzentrischen Bohrung (34) und einem angeformten Stopfen (33; 44), der im Bereich der konzentrischen Bohrung (34) mit dem scheibenförmigen Bauteil (32; 40) verbunden ist, wobei im Bereich des Bohrungsgrundes der Bohrung (34) wenigstens ein partieller, nicht umlaufender, kreisabschnitts- (35) oder bogenförmiger Hinterschnitt (36) angeordnet und dieser mit dem Werkstoff des Stopfens (33; 44) ausgefüllt ist,
wobei die Umfangskraft zur Einleitung einer Drehbewegung am scheibenförmigen Bauteil (32; 40) betragsmäßig kleiner ist, als die Reibungskraft des Stopfens (33; 44) in einer Flaschenöffnung im Zustand der Haftreibung, und dadurch die feste Verbindung zwischen scheibenförmigem Bauteil (32; 40) und dem Stopfen (33; 44) zerstörbar und das scheibenförmige Bauteil (32; 40) gegenüber dem Stopfen (33; 44) drehbar ist.

14. T-Korken (31; 39) mit einer Kindersicherung nach Patentanspruch 13,
**dadurch gekennzeichnet, dass**
im Bereich des Bohrungsgrundes der Bohrung (34) mehrere Hinterschnitte einander gegenüberliegend oder über den Umfang der koaxialen Bohrung (34) verteilt angeordnet und diese mit dem Werkstoff des Stopfens (33; 44) ausgefüllt sind.

15. T-Korken (31; 39) mit einer Kindersicherung nach Patentanspruch 13,
**dadurch gekennzeichnet, dass,**
das scheibenförmige Bauteil (32; 40) gegenüber dem Stopfen (33; 44) erst nach Zerstörung der Verbindung zwischen scheibenförmigem Bauteil (32; 40) und Stopfen (33; 44) drehbar ist.

16. T-Korken (39) nach Patentanspruch 13,
**dadurch gekennzeichnet, dass**
das scheibenförmige Bauteil (40) wenigstens einen Hinterschnitt (41) und koaxial zu diesem eine Einfräsung (42) hat,
wobei der Hinterschnitt (41) und die Einfräsung (42) mit dem Werkstoff des Stopfens (44) ausgefüllt sind.

17. Verwendung eines T-Korken (31; 39) mit einer Kindersicherung nach einem der Patentansprüche 8 bis 10 zum Verschluss von Behältnissen, die mit Inhaltsstoffen gefüllt sind, bei denen der Zugang erschwert sein soll.

## Claims

1. A method for producing a T-cork (1), wherein the latter comprises:
a disc-shaped component (18),
and a stopper (3), which is produced by a primary moulding process,
wherein
the disc-shaped component (18) comprises a bore (4) with an undercut, in the region whereof the connection between the latter and the stopper (3) is formed,
wherein
the T-cork can be produced by a number of successive, temporarily overlapping or simultaneous work steps, in such a way that:
- in a first work cycle, a disc-shaped component (18) is produced in a device (16) from a starting material and its outer contour (10) is processed on all sides,
- a cylindrical bore (4) of infinite depth is simultaneously introduced into an end face (15) of the disc-shaped component (18)
- and the disc-shaped component (18) is ejected,
- subsequently in a second work cycle, machining takes place in a device (17) roughly in the region of the bore base (22) of the disc-shaped component (18), by means of which a partial, non-circumferential undercut is formed, wherein the latter is formed asymmetrical to the bore (4),
- in a third work cycle, the disc-shaped component (18) is fed to a moulding tool (13), is positioned in the latter in such a way that it is positioned with its outer side in a die, a connection to the remaining cavity of the moulding tool exists at least with the bore (4) and subsequently a foamable plastic material is injected, foamed and the remaining mould cavity and the concentric bore (4) with the undercut is thus completely filled, in such a way that a stopper (3), comprising a foamed plastic, is integrally moulded to the disc-shaped component (18) .

2. The method for producing a T-cork (1; 31; 39) with a child safety device,
wherein the latter comprises:
a disc-shaped component (18; 32; 40),
and a stopper (3; 33; 44), which is produced by a primary moulding process,
wherein
the disc-shaped component (18; 32; 40) comprises a bore (4) with an undercut, in the region whereof the connection between the latter and the stopper (3; 33; 44) is formed,
and the child safety device is thereby simultaneously formed,
wherein
the T-cork (1; 31; 39) can be produced by a number of successive, temporarily overlapping or simultaneous work steps, in such a way that:
- in a first work cycle, a disc-shaped component (18; 32; 40) is produced in a device (16) from a starting material and its outer contour (10) is processed on all sides,
- a cylindrical bore (4; 34) of infinite depth is simultaneously introduced into an end face (15) of the disc-shaped component (18; 32; 40)
- and the disc-shaped component (18; 32; 40)) is ejected,
- subsequently in a second work cycle, machining takes place in a device (17) roughly in the region of the bore base (5) of the disc-shaped component (18; 32; 40), by means of which at least a partial, non-circumferential undercut (23; 24; 25; 26; 27; 28; 29; 35; 36) is produced and constituted laterally offset to the bore (4; 34),
- in a third work cycle, the disc-shaped component (18; 32; 40) is fed to a moulding tool and is positioned in the latter in such a way that it lies with its outer side in a die, a connection to the remaining cavity of the moulding tool exists at least with the bore (4; 34) and subsequently a foamable plastic material is injected, foamed and the remaining mould cavity, the bore (4; 34) and the undercut (23; 24; 25; 26; 27; 28; 29; 35; 36) is thus completely filled, in such a way that a stopper (3; 33; 44), comprising foamed plastic, is integrally moulded to the disc-shaped component (18; 32; 40),
and the child safety device is designed in such a way that, when a rotary movement is initiated on the disc-shaped component (18; 32; 40) with a peripheral force which is smaller in amount than the frictional force of the stopper (3; 33; 44) in a bottle opening in the state of static friction, the firm connection between the disc-shaped component (18; 32; 40) and the stopper (3; 33; 44) is destroyed and the disc-shaped component (18; 32; 40) is rotatable with respect to the stopper ((3; 33; 44).

3. The method for producing a T-cork (1) or a T-cork (1; 31; 39) with a child safety device according to any one of claims 1 or 2,
**characterised in that**
the disc-shaped component (18; 32; 40) is produced in the first work cycle by machining from rod-shaped or plate-shaped material.

4. The method for producing a T-cork (1) or a T-cork (1; 31; 39) with a child safety device according to any one of claims 1 or 2,
**characterised in that**
the disc-shaped component (18; 32; 40) is produced in the first work cycle by a primary moulding process.

5. The method for producing a T-cork (1) or a T-cork (1; 31; 39) with a child safety device according to any one of claims 1 or 2,
**characterised in that**
in the second work cycle the bore (4) in the disc-shaped component (18) receives an undercut (23) in the bore base (22), whereby a milling tool (20) drives into the concentric bore (4) and, after reaching the working position, is at least once deflected laterally to an extent such that an undercut (23) is machined with the aid of the working tool.

6. The method for producing a T-cork (1) or a T-cork (1; 31; 39) with a child safety device according to claim 5,
**characterised in that**
the milling tool (20) is subsequently deflected in the opposite direction and a second undercut (24) is machined.

7. The method for producing a T-cork (1) or a T-cork (1; 31; 39) with a child safety device according to claim 5,
**characterised in that**
the milling tool (20) is deflected in more than two directions and more than two undercuts are machined.

8. The method for producing a T-cork (1) and/or a T-cork (1; 31; 39) with a child safety device according to claim 5,
**characterised in that**
the milling tool (20) is guided by a control system and forms polygonal, flower-shaped, cloverleaf-shaped, star-shaped, arch-shaped, wavelike or tooth-shaped undercuts.

9. The method for producing a T-cork (1; 31; 39) with a child safety device according to any one of claims 2 to 8,
**characterised in that**
in the second work cycle, a milling tool (20) with a stepped design is used, which also machines in the region of the milling shank, and the milling tool (20) is moved and/or controlled in such a way that, when an undercut (41) is formed, a milled recess (42) is also formed in the edge (43) of the disc-shaped component (40).

10. A T-cork, produced according to the method according - to claim 1,
comprising a disc-shaped component (18) with a concentric bore (4) and an integrally moulded stopper (3), which is connected in the region of the concentric bore (4) to the disc-shaped component (18), wherein
at least one partial, non-circumferential circular segment-shaped (23) or arch-shaped undercut is arranged in the region of the bore base (22) and said undercut is filled with the material of the stopper (3).

11. The T-cork according to claim 10,
**characterised in that**,
in the region of the bore base (5), a plurality of undercuts are arranged opposite one another or distributed over the circumference of the coaxial bore (4) and the latter are filled with the material of the stopper (3).

12. The T-cork according to claim 11,
**characterised in that**
an arch-shaped, flower-shaped, cloverleaf-shaped, polygonal, wavelike or tooth-like contour line (30) is formed by the plurality of undercuts.

13. The T-cork (31; 39) with a child safety device, produced according to a method according to any one of claims 2 to 9,
comprising a disc-shaped component (32; 40) with a concentric bore (34) and an integrally moulded stopper (33; 44), which is connected in the region of the concentric bore (34) to the disc-shaped component (32; 40),
wherein
at least one partial, non-circumferential circular segment-shaped (35) or arch-shaped undercut (36) is arranged in the region of the bore base of the bore (34) and said undercut is filled with the material of the stopper (33; 44),
wherein,
when a rotary movement is initiated on the disc-shaped component (32; 40), the peripheral force is smaller in amount than the frictional force of the stopper (33; 44) in a bottle opening in the state of static friction, the firm connection between the disc-shaped component (32; 40) and the stopper (33; 44) is destroyed and the disc-shaped component (32; 40) is rotatable with respect to the stopper (33; 44).

14. The T-cork (31; 39) with a child safety device according to claim 13,
**characterised in that**,
in the region of the bore base of the bore (34), a plurality of undercuts are arranged opposite one another or distributed over the circumference of the coaxial bore (34) and the latter are filled with the material of the stopper (33; 44).

15. The T-cork (31; 39) with a child safety device according to claim 13,
**characterised in that**
the disc-shaped component (32; 40) is rotatable with respect to the stopper (33; 44) only after the destruction of the connection between the disc-shaped component (32; 40) and the stopper (33; 44).

16. The T-cork (39) according to claim 13,
**characterised in that**
the disc-shaped component (40) has at least one undercut (41) and a milled recess (42) coaxial with the latter,
wherein the undercut (41) and the milled recess (42) are filled with the material of the stopper (44).

17. Use of a T-cork (31; 39) with a child safety device according to any one of claims 8 to 10 for the closure of containers which are filled with contents, access to which is designed to be made difficult.

## Revendications

1. Procédé, destiné à fabriquer un bouchon en forme de T (1), celui-ci étant constitué :
d'un élément constitutif (18) en forme de disque,
et d'un obturateur (3), qui est créé par un procédé de formage primaire,
l'élément constitutif (18) en forme de disque comportant un perçage (4) doté d'une contre-dépouille,
dans la zone de laquelle est réalisée la liaison entre celui-ci et l'obturateur (3),
le bouchon en forme de T étant susceptible d'être fabriqué par un nombre d'étapes de travail se chevauchant successivement dans le temps ou ayant lieu simultanément, de telle sorte que :
- dans un premier cycle de travail, dans un équipement (16), un élément constitutif (18) en forme de disque est fabriqué à partir d'une matière de départ et son contour extérieur (10) est usiné de toutes parts,
- simultanément, dans une face frontale (15) de l'élément constitutif (18) en forme de disque est ménagé un perçage (4) cylindrique, de profondeur finale,
- et l'élément constitutif (18) en forme de disque est éjecté,
- par la suite, dans un deuxième cycle de travail, à l'aide d'un équipement (17), approximativement dans la zone du fond inférieur du perçage (22) de l'élément constitutif (18) en forme de disque est effectué un usinage par enlèvement de copeaux ayant pour effet de créer une contre-dépouille partielle, non circonférentielle, celle-ci étant réalisée de manière asymétrique par rapport au perçage (4),
- dans un troisième cycle de travail, l'élément constitutif (18) en forme de disque est amené vers un outil de formage (13), positionné dans celui-ci de sorte à être positionné par sa face extérieure dans une matrice, et qu'une liaison persiste au moins via le perçage (4) avec la cavité restante de l'outil de formage et par la suite, une matière plastique expansible est injectée, amenée en expansion, ce qui a pour effet de remplir complètement la cavité de moule restante et le perçage (4) concentrique avec la contre-dépouille, de telle sorte que sur l'élément constitutif (18) en forme de disque soit surmoulé un obturateur (3) constitué d'une matière plastique expansée.

2. Procédé, destiné à fabriquer un bouchon en forme de T (1 ; 31 ; 39), pourvu d'une sécurité enfant, celui-ci étant créé à partir :
d'un élément constitutif (18 ; 32 ; 40) en forme de disque,
et d'un obturateur (3 ; 33 ; 44), qui est créé par un procédé de formage primaire,
l'élément constitutif (18 ; 32 ; 40) en forme de disque comportant un perçage (4) pourvu d'une contre-dépouille, dans la zone de laquelle est réalisée la liaison entre celui-ci et l'obturateur (3 ; 33 ; 44),
et à cet effet étant réalisée simultanément la sécurité enfant,
le bouchon en forme de T (1 ; 31; 39) étant susceptible d'être fabriqué par un nombre d'étapes de travail se chevauchant dans le temps ou ayant lieu simultanément, de telle sorte que :
- dans un premier cycle de travail, dans un équipement (16), un élément constitutif (18 ; 32 ; 40) en forme de disque est fabriqué à partir d'une matière de départ et son contour extérieur (10) est usiné de toutes parts,
- simultanément, dans une face frontale (15) de l'élément constitutif (18 ; 32 ; 40) en forme de disque est ménagé un perçage (4 ; 34) cylindrique, de profondeur finale,
- et l'élément constitutif (18 ; 32 ; 40) en forme de disque est éjecté,
- par la suite, dans un deuxième cycle de travail, à l'aide d'un équipement (17), approximativement dans la zone du fond inférieur du perçage (5) de l'élément constitutif (18 ; 32 ; 40) en forme de disque est effectué un usinage par enlèvement de copeaux ayant pour effet de créer une contre-dépouille (23 ; 24 ; 25 ; 26 ; 27 ; 28 ; 29 ; 35 ; 36) partielle et réalisée en étant latéralement décalée par rapport au perçage (4 ; 34),
- dans un troisième cycle de travail, l'élément constitutif (18 ; 32 ; 40) est amené vers un outil de formage, positionné dans celui-ci de sorte à être positionné par sa face extérieure dans une matrice, et de sorte qu'une liaison persiste au moins via le perçage avec la cavité restante de l'outil de formage et par la suite, une matière plastique expansible est injectée, amenée en expansion, ce qui a pour effet de remplir complètement la cavité de moule restante et le perçage (4 ; 34) et la contre-dépouille (23 ; 24 ; 25 ; 26 ; 27 ; 28 ; 29 ; 35 ; 36), de telle sorte que sur l'élément constitutif (18 ; 32 ; 40) en forme de disque soit surmoulé un obturateur (3 ; 33 ; 44), constitué d'une matière plastique expansée,
et la sécurité enfant est réalisée de telle sorte que lors de l'introduction d'un mouvement de rotation sur l'élément constitutif (18 ; 32 ; 40) en forme de disque, à l'aide d'une force circonférentielle, qui par sa valeur est inférieure à la force de friction de l'obturateur (3 ; 33 ; 44), dans un orifice de bouteille, dans l'état de la friction statique, la liaison solide entre l'élément constitutif (18 ; 32 ; 40) en forme de disque et l'obturateur (3 ; 33 ; 44) soit détériorée et l'élément constitutif (18 ; 32 ; 40) en forme de disque adopte l'aptitude à tourner par rapport à l'obturateur (3 ; 33 ; 44).

3. Procédé, destiné à fabriquer un bouchon en forme de T (1) ou un bouchon en forme de T (1 ; 31 ; 39) pourvu d'une sécurité enfant selon l'une quelconque des revendications 1 ou 2,
**caractérisé en ce que**
l'élément constitutif (18 ; 32 ; 40) en forme de disque est créé dans un premier cycle de travail par usinage par enlèvement de copeaux, à partir d'une matière en forme de barre ou en forme de plaque.

4. Procédé, destiné à fabriquer un bouchon en forme de T (1) ou un bouchon en forme de T (1 ; 31 ; 39) pourvu d'une sécurité enfant selon l'une quelconque des revendications 1 ou 2,
**caractérisé en ce que**
l'élément constitutif (18 ; 32 ; 40) en forme de disque est créé par formage primaire, lors du premier cycle de travail.

5. Procédé, destiné à fabriquer un bouchon en forme de T (1) ou un bouchon en forme de T (1 ; 31 ; 39) pourvu d'une sécurité enfant selon l'une quelconque des revendications 1 ou 2,
**caractérisé en ce que**
dans le deuxième cycle de travail, le perçage (4) dans l'élément constitutif (18) en forme de disque est doté dans le fond inférieur de perçage (22) d'une contre-dépouille (23) **en ce qu'**un outil de fraisage (20) pénètre dans le perçage (4) concentrique et après atteinte de la position de travail, est dévié latéralement au moins une fois, jusqu'à ce qu'à l'aide de l'outil de travail, une contre-dépouille (23) soit créée par enlèvement de copeaux.

6. Procédé, destiné à fabriquer un bouchon en forme de T (1) ou un bouchon en forme de T (1 ; 31 ; 39) pourvu d'une sécurité enfant selon la revendication 5,
**caractérisé en ce que**
l'outil de fraisage (20) est dévié ensuite dans la direction opposée et **en ce qu'**une deuxième contre-dépouille (24) est créée par enlèvement de copeaux.

7. Procédé, destiné à fabriquer un bouchon en forme de T (1) ou un bouchon en forme de T (1 ; 31 ; 39) pourvu d'une sécurité enfant selon la revendication 5,
**caractérisé en ce que**
l'outil de fraisage (20) est dévié dans plus de deux directions et **en ce que** plus de deux contre-dépouilles sont créées par enlèvement de copeaux.

8. Procédé, destiné à fabriquer un bouchon en forme de T (1) et/ou un bouchon en forme de T (1 ; 31 ; 39) pourvu d'une sécurité enfant selon la revendication 5,
**caractérisé en ce que**
l'outil de fraisage (20) est guidé à l'aide d'un système de commande et réalise des contre-dépouilles de forme polygonale, de forme alvéolaire, en forme de trèfle, en forme d'étoile, de forme curviligne, de forme ondulée ou de forme dentée.

9. Procédé, destiné à fabriquer un bouchon en forme de T (1 ; 31 ; 39) pourvu d'une sécurité enfant selon l'une quelconque des revendications 2 à 8,
**caractérisé en ce que**
dans le deuxième cycle de travail, un outil de fraisage (20) en version étagée, qui également dans la zone de la tige de la fraise travaille par enlèvement de copeaux est utilisé
et **en ce qu'**on déplace et/ou on commande l'outil de fraisage (20) de telle sorte, que lors de la réalisation d'une contre-dépouille (41), un fraisage (42) soit réalisé dans le bord (43) de l'élément constitutif (40) en forme de disque.

10. Bouchon en forme de T, fabriqué d'après un procédé selon la revendication 1,
constitué d'un élément constitutif (18) en forme de disque, pourvu d'un perçage (4) concentrique et d'un obturateur (3) surmoulé, qui dans la zone du perçage (4) concentrique, est relié avec l'élément constitutif (18) en forme de disque,
dans la zone du fond inférieur de perçage (22) étant placée au moins une contre-dépouille partielle, non circonférentielle, en forme de segment de cercle (23) ou de forme curviligne et celle-ci étant remplie avec la matière de l'obturateur (3).

11. Bouchon en forme de T selon la revendication 10,
**caractérisé en ce que**
dans la zone du fond inférieur de perçage (5), plusieurs contre-dépouilles sont placées en en vis-à-vis ou en distribution sur la circonférence du perçage (4) coaxial et celles-ci sont remplies avec la matière de l'obturateur (3).

12. Bouchon en forme de T selon la revendication 11,
**caractérisé en ce que**
par les plusieurs contre-dépouilles est réalisée une ligne de contour (30) de forme curviligne, alvéolaire, en forme de trèfle, de forme polygonale ou ondulée ou analogue à une denture.

13. Bouchon en forme de T (31 ; 39) pourvu d'une sécurité enfant, fabriqué d'après un procédé selon l'une quelconque des revendications 2 à 9,
constitué d'un élément constitutif (32 ; 40) en forme de disque, pourvu d'un perçage (34) concentrique et d'un obturateur (33 ; 44) surmoulé, qui dans la zone du perçage (34) concentrique, est relié avec l'élément constitutif (32 ; 40) en forme de disque,
dans la zone du fond inférieur de perçage du perçage (34) étant placée au moins une contre-dépouille (36) partielle, non circonférentielle, en forme de segment de cercle (35) ou de forme curviligne et celle-ci étant remplie avec la matière de l'obturateur (33 ; 44),
la force circonférentielle destinée à induire un mouvement de rotation sur l'élément constitutif (32 ; 40) en forme de disque étant inférieure par sa valeur à la force de friction de l'obturateur (33 ; 44) dans un orifice de bouteille, dans l'état de la friction statique et de ce fait, la liaison fixe entre l'élément constitutif (32 ; 40) en forme de disque et l'obturateur (33 ; 44) étant susceptible d'être détériorée et l'élément constitutif (32 ; 40) en forme de disque étant rotatif par rapport à l'obturateur (33 ; 44).

14. Bouchon en forme de T (31 ; 39) pourvu d'une sécurité enfant selon la revendication 13,
**caractérisé en ce que**
dans la zone du fond inférieur de perçage du perçage (34), plusieurs contre-dépouilles sont placées en vis-à-vis ou en distribution sur la circonférence du perçage (34) coaxial et celles-ci sont remplies avec la matière de l'obturateur (33 ; 44).

15. Bouchon en forme de T (31 ; 39) pourvu d'une sécurité enfant selon la revendication 13,
**caractérisé en ce que**
l'élément constitutif (32 ; 40) en forme de disque n'est rotatif par rapport à l'obturateur (33 ; 44) qu'après détérioration de la liaison entre l'élément constitutif (32 ; 40) en forme de disque et l'obturateur (33 ; 44).

16. Bouchon en forme de T (39) selon la revendication 13,
**caractérisé en ce que**
l'élément constitutif (40) en forme de disque dispose d'au moins une contre-dépouille (41) et de manière coaxiale à celle-ci, d'un fraisage (42),
la contre-dépouille (41) et le fraisage (42) étant remplis avec la matière de l'obturateur (44).

17. Utilisation d'un bouchon en forme de T (31 ; 39) pourvu d'une sécurité enfant selon l'une quelconque des revendications 8 à 10 pour fermer des contenants qui sont remplis d'ingrédients dont l'accès doit être compliqué.
